# EUROPEAN PATENT SPECIFICATION

(11) **EP 0 772 184 B1**
(45) Date of publication and mention of the grant of the patent: **13.06.2001**
(21) Application number: 96117224.4
(22) Date of filing: 26.10.1996
(51) Int. Cl.: G10L 13/04

(54) **Vocal identification of devices in a home environment**
Identifizierung von Haushaltsgeräten anhand einer Stimme
Identification d'appareils ménagers par la voix

(30) Priority: 06.11.1995 EP 95402468
(43) Date of publication of application: 07.05.1997
(73) Proprietor: THOMSON multimedia, 92648 Boulogne Cédex (FR)
(72) Inventor: Diehl, Eric, 35135 Chantepie (FR); Corda, Gérard, 67400 Illkirch (FR)
(74) Representative: Hartnack, Wolfgang, Dipl.-Ing.

(56) References cited:
- EP-A- 0 496 492
- US-A- 4 520 576
- US-A- 4 703 306
- US-A- 4 944 211
- IEEE TRANSACTIONS ON INDUSTRY APPLICATIONS, vol. ia-19, no. 1, January 1983 - February 1983, pages 136-141, XP002001875 D. BAKER: "VOICE SYNTHESIS APPLIANCES: apragmatic analysis"
- JOURNAL OF THE ACCOUSTICAL SOCIETY OF AMERICA, vol. 82, no. 3, September 1987, NY, USA, pages 737-793, XP002001876 D.H.KLATT: "review of the text to speech conversion for english"

## Description

The invention relates to the vocal identification of controllable devices, especially in a home environment, and in particular to a speech-based man-machine communication system and a method for determining a target device out of a plurality of devices and communicating with such a device.

Currently the control of controllable devices, especially consumer devices like VCRs, TV sets or CD players, is performed by the use of one or more remote control units which deliver the information or commands in most cases via an IR (infrared) beam. The feedback of the chosen device to the user is normally provided via an optical display of the action resulting from the command. Other man-machine interfaces are known, for example when a computer controls a certain amount of devices, which need not necessarily be consumer devices, wherein the interface between the man and the machine is usually provided via a keyboard, a mouse and a screen, with which a central processing unit controls the connected devices via programs.

Because of the increasing number and complexity of the consumer devices the above man-machine interfaces are not very user-friendly. One way to enhance the user-friendliness of a user interface is to increase the number of senses that the user interface appeals to. One of the most promising natural input/output possibility is the speech interface.

IEEE TRANSACTIONS ON INDUSTRY APPLICATIONS, vol. IA-19, no. 1, January/February 1983, pages 136 - 141, XP002001875, D. Baker: "Voice Synthesis Appliances: A Pragmatic Analysis", describes speech synthesis and recognition in home appliances.
US-A-4 703 306 discloses a system with a central controller and a plurality of appliances, without using speech recognition and speech synthesis.
US-A-4 520 576 shows a control system for home appliances having a speech recogniser and a speech synthesiser.

Voice can be used both for the command, with speech recognition, and for the feedback through voice synthesis. The current applications using voice synthesis are designed for an environment managing only one device. In this known case the device is equipped with a speech recognition and a voice synthesis system. Such solutions are known for example from the field of robotics. In contrast, a consumer household usually comprises a plurality of different devices, which can be controllable in principle. This poses the problem of how to identify the different controllable devices in a dialogue between the user and the devices, if a voice-based man-machine interface is used.

It is therefore an object of the present invention to provide a voice-based man-machine communication system which establishes a "natural" dialogue between the user and his home devices.

This object is solved by the subject matter of the independent claims. Preferred embodiments of the invention are subject of the dependent claims.

The vocal feedback can occur mainly in two circumstances:
Generation of a help function for the customer, for example the device may provide guidance while the user performs a complex task.
Inform or warn the user at a time when the user may not be focusing his attention to the device concerned.

In the known mono-device environment this is straightforward because the single device delivers its message. In a multi-device environment each device has to provide one additional information, namely the identification of the device issuing the message. This identification of the device is given by the characterizing feature of claim 1, wherein each controllable device is provided with its own unique voice. In other words, each device has its own voice synthesizer, which can synthesize the voice of this particular device in such a way, that it is possible to identify this device. This is very convenient for the user, because in the natural world each person is identified by its own personal voice. Therefore the message delivered by the device contains implicitely the identification information for the issuer.

Furthermore this vocal identification can be inhanced by providing for each device a voice that fits with the mental image the user has from the device. For instance, in France the TV set (la télé) is perceived as a female device whereas the VCR (le magnétoscope) is perceived as a male device. In this case, it would be advantageous to provide a female voice for the TV set and a male voice for the VCR. Further it is possible to equipe each device with several different voices, so that the user chooses the voice he likes better. This does not pose any problem, because it is possible to program the voice synthesizer this way.

Therefore, the present invention comprises a speech based man-machine communication system with more than one controllable device each provided with a speech synthesis, wherein each controllable device is provided with its own unique voice pattern.

In particular the controllable devices of the man-machine communication system are consumer devices in a home environment, but the invention can be used in other environments.

In a preferred embodiment according to the invention, all devices are linked via a bus. This bus can be realized in a variety of way, for example in a wire-based electrical fashion, with optical fibres, or with radio or IR beams. To lower the complexity of the inventive speechbased man-machine communication system, the system is provided with one unique central authority, which manages all the requests issued by the user. For that purpose the central authority is equipped with a speech recognition, collects all the requests issued by the user, and dispatches the commands to the devices concerned. These user commands can be directly activated on standard input devices such as remote controllers dedicated to one or several devices or by a vocal message. In that case, the vocal message is directly received and analysed by the central authority. The speech recognition is currently studied in the laboratories and existing solutions are available on the market. This architecture limits the proliferation of the expensive hardware and software for speech recognition.

To achieve a user friendly environment, the vocal interface should stick as much as possible to the natural language.

Although this solution is very attractive, it has a main drawback, mainly that same commands may be understood by different devices. For instance the phrase "switch to program 5" is meaningful for both TV set and VCR.

To avoid confusion of commands, there exists a simple solution in that it is up to the user to state explicitely which device he wants to command. This approach is straightforward, but not very flexible. Therefore according to the invention a more flexible and natural algorithm is used, which will be now described:

When a command is received by the speech recognition, the central authority checks whether the target device was explicitely stated. In that case the command is directed to the called or stated device. Otherwise, the central authority checks whether the command is related to one unique device only. In that case the command is directed to this unique device. Otherwise, the central authority lists all those devices that may understand the command. Each listed device then asks the user in plain language whether the command was dedicated to it. This procedure is continued until the user defines which device he was targeting by giving a positive answer for example. The device list can be generated using a statistical or probability approach. Because each device has its own voice, the user is able to hold a natural dialogue with the device.

A preferred embodiment of the algorithm used by the central authority for selecting the called device will now be described in more detail by way of example, with reference to the drawing, wherein

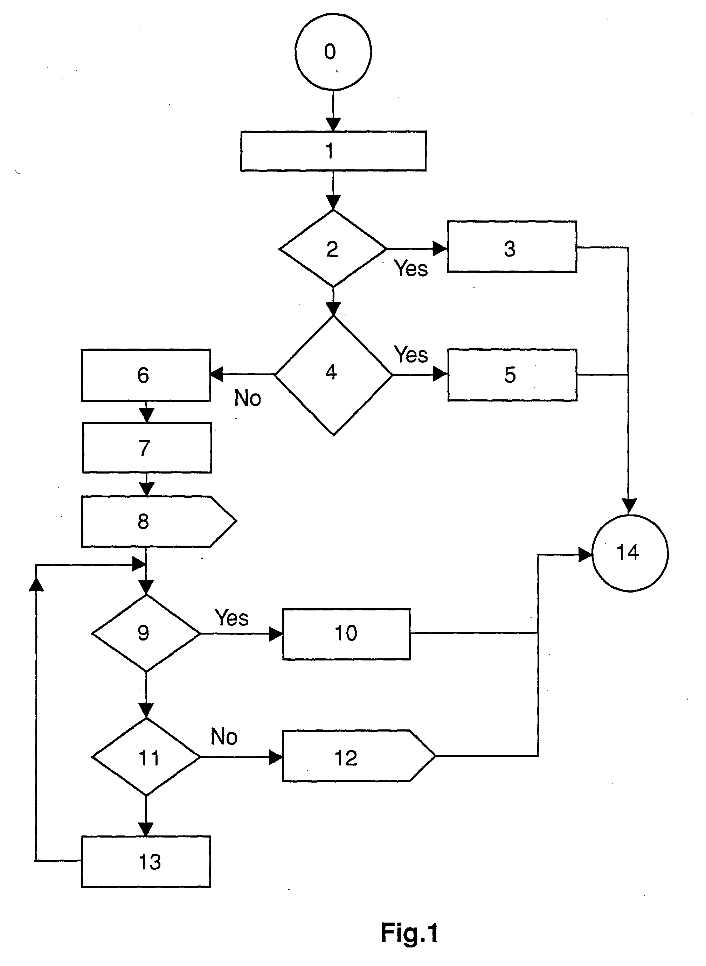

Fig. 1 shows a flow chart of the used algorithm.
Fig. 1 shows a flow chart of the algorithm as it is operated in the central authority, which can be formed by an appropriate computer like a personal computer or a workstation. The algorithm starts with step 0. In step 1 the central authority receives a vocal command from the user. In step 2 this vocal command is analyzed to determine whether the target device is stated or not. This task can be performed if the used devices are named properly. If the answer is yes the central authority sends in step 3 the command to the target device and the algorithm is finished (step 14). If the answer is no the central authority analyzes the command and determines if it is related to a special target device. In other words the central authority checks as a function of the connected devices whether the command is unambiguous. If the answer is yes the algorithm proceeds to step 5, in which the command is sent to the target device. Then the algorithm is finished (step 14). If the answer is no the central authority identifies in step 6 all possible devices, which could be related to the given command. Further in this step 6, the central authority generates a list of the possible target devices. The order of said list can be prescribed or determined by e.g. a statistical approach. In step 7 the first possible target device is selected. Because of a command from the central authority, the so-selected device asks in step 8 for confirmation i.e. its voice synthesis is activated. In step 9 the user's answer is analyzed by the central authority. If the answer is yes the command is sent to the selected device in step 10. The algorithm is then finished (step 14). If the user does not answer with yes or after a predetermined time period has lapsed, the central authority checks in step 11 whether the list of step 6 contains further devices. If the list does not contain any more devices the central authority outputs the user in step 12 the receipt of an unrecognized command. The algorithm is then finished. If there are still more devices in the list the central authority selects in step 13 the next device on the list which then asks the user for confirmation and goes back to step 9.

The process can be optimized. Since the central authority has selected all the concerned devices, it can classify them in the order of decreasing probability. For instance, if the user requests a program to be switched when the TV set is switched on, it is more probable that the command was for the TV set than for the VCR. For this reason the TV set will speak first. If both devices are switched off, the chance is the same for each device.

## Claims

1. Speech based man-machine communication system including:
- a plurality of controllable devices, each device being provided with its own speech synthesiser;
- one single central authority device, the central authority device being provided with a speech recognition system and being arranged for receiving a vocal command from a user and issuing a corresponding command to one of the controllable devices;
- a bus for linking each of said controllable devices and said central authority device, the system being **characterised** in that each of said speech synthesisers synthesises its own unique voice from which it is possible to identify the respective device.

2. System according to claim 1, wherein said controllable devices are consumer devices in a home environment.

3. System according to claim 1 or 2, wherein the unique voices of said controllable devices include a male and a female voice depending on whether the device is perceived by the user as a male or a female device.

4. System according to any of claims 1 to 3, wherein said central authority determines the target device according to the following steps:
a) if the target device is explicitly stated in the user command the central authority issues a command to the target device;
b) if the target device is not explicitly stated the central authority checks whether the user command is related to one unique device;
- if b) is true the central authority issues a command to this device;
- if b) is false the central authority generates a list of all possible devices that may understand the command.

5. System according to claim 4, wherein according to the list of possible target devices each possible target device is triggered by the central authority to issue a question to the user until a positive answer is given.

6. System according to claim 4 or 5, wherein the list of possible target devices is generated according to a probability approach.

7. Method for selecting a target device among a plurality of controllable devices, the target device and the other controllable devices being provided with its own speech synthesiser, wherein said target device and the other controllable devices are linked by a bus to a central authority device which is provided with a speech recognition system and is arranged for receiving a vocal command from a user and for issuing a corresponding command to one of the controllable devices including said target device, **characterised** in that each of said speech synthesisers of said controllable devices including said target device synthesises its own unique voice from which it is possible to identify the respective device.

8. Method according to claim 7, wherein the target device is determined according to the following steps:
a) if the target device is explicitly stated in the user command the target device receives a command from the central authority;
b) if the target device is not explicitly stated the central authority checks whether the command is related to one unique device;
- if b) is true the target device receives a command from the central authority;
- if b) is false the central authority generates a list of all possible devices that may understand the command.

9. Method according to claim 8, wherein according to the list of possible devices the target device is triggered by the central authority to issue a question to the user.

10. Method according to claim 8 or 9, wherein the list of possible target devices is generated according to a probability approach.

## Patentansprüche

1. Auf Sprache beruhendes Mensch-Maschine-Nachrichten-Übertragungssystem umfassend:
- eine Vielzahl von steuerbaren Geräten, wobei jedes Gerät mit seinem eigenen Sprach-Synthesizer versehen ist;
- eine einzelne zentrale Autoritäts-Vorrichtung, die mit einem Spracherkennungssystem versehen und so ausgebildet ist, daß sie einen sprachlichen Befehl von einem Benutzer empfängt und einen entsprechenden Befehl an eines der steuerbaren Geräte ausgibt;
- einen Bus zum Verknüpfen aller steuerbaren Geräte und der zentralen Autoritäts-Vorrichtung, wobei das System dadurch gekennzeichnet ist, daß jeder Sprach-Synthesiser seine eigene eindeutige Stimme synthetisiert, aus der es möglich ist, das entsprechende Gerät zu identifizieren.

2. System nach Anspruch 1, bei dem die steuerbaren Geräte Haushaltsgeräte sind.

3. System nach Anspruch 1 oder 2, bei dem die eindeutigen Stimmen der steuerbaren Geräte eine männliche und eine weibliche Stimme in Abhängigkeit davon enthalten, ob das Gerät von dem Benutzer als ein männliches oder ein weibliches Gerät empfunden wird.

4. System nach einem der Ansprüche 1 bis 3, bei dem die zentrale Autorität das Zielgerät gemäß den folgenden Schritten bestimmt:
a) wenn das Zielgerät ausdrücklich in dem Benutzerbefehl angegeben ist, erteilt die zentrale Autorität einen Befehl an das Zielgerät;
b) wenn das Zielgerät nicht ausdrücklich angegeben ist, prüft die zentrale Autorität, ob der Benutzerbefehl auf ein eindeutiges Gerät bezogen ist;
- wenn b) zutrifft, erteilt die zentrale Autorität einen Befehl an dieses Gerät;
- wenn b) nicht zutrifft, erzeugt die zentrale Autorität eine Liste von allen möglichen Geräten, die den Befehl verstehen können.

5. System nach Anspruch 4, bei dem gemäß der Liste von möglichen Zielgeräten jedes mögliche Zielgerät durch die zentrale Autorität ausgelöst wird, um eine Frage an den Benutzer auszugeben, bis eine positive Antwort gegeben wird.

6. System nach Anspruch 4 oder 5, bei dem die Liste der möglichen Zielgeräte gemäß einer Wahrscheinlichkeitsannäherung erzeugt wird.

7. Verfahren zum Auswählen eines Zielgerätes aus einer Vielzahl von steuerbaren Geräten, wobei das Zielgerät und die anderen steuerbaren Geräte mit ihrem eigenen Sprach-Synthesizer versehen sind, wobei das Zielgerät und die anderen steuerbaren Geräte durch einen Bus mit einer zentralen Autoritäts-Vorrichtung verknüpft sind, die mit einem Spracherkennungssystem versehen und so ausgebildet ist, daß sie einen sprachlichen Befehl von einem Benutzer empfängt und einen entsprechenden Befehl an die steuerbaren Vorrichtungen einschließlich der Zielvorrichtung erteilt,
dadurch gekennzeichnet, daß jeder Sprach-Synthesizer der steuerbaren Geräte einschließlich des Zielgerätes seine eigene eindeutige Stimme synthetisiert, aus der es möglich ist, das entsprechende Gerät zu identifizieren.

8. Verfahren nach Anspruch 7, bei dem das Zielgerät gemäß den folgenden Schritten bestimmt wird:
a) wenn das Zielgerät ausdrücklich in dem Benutzerbefehl angegeben ist, empfängt das Zielgerät einen Befehl von der zentralen Autorität;
b) wenn das Zielgerät nicht ausdrücklich angegeben ist, prüft die zentrale Autorität, ob der Befehl auf ein eindeutiges Gerät bezogen ist;
- wenn b) zutrifft, empfängt das Zielgerät einen Befehl von der zentralen Autorität;
- wenn b) nicht zutrifft, erzeugt die zentrale Autorität eine Liste aller möglichen Geräte, die den Befehl verstehen können.

9. Verfahren nach Anspruch 8, bei dem gemäß der Liste von möglichen Geräten das Zielgerät durch die zentrale Autorität ausgelöst wird, um eine Frage an den Benutzer zu stellen.

10. Verfahren nach Anspruch 8 oder 9, bei dem die Liste der möglichen Zielgeräte gemäß einer Wahrscheinlichkeitsannäherung erzeugt wird.

## Revendications

1. Système de communication homme-machine comprenant :
- un certain nombre d'appareils contrôlables, chacun d'entre eux étant équipé de sa propre unité de synthèse vocale ;
- un système de gestion central unique équipé d'un système de reconnaissance vocale et conçu pour recevoir une commande vocale émise par un utilisateur et transmettre une commande correspondante vers l'un des appareils contrôlables ;
- un bus de liaison entre chaque appareil contrôlable et le système de gestion central,
**caractérisé en ce que** chaque unité de synthèse vocale synthétise sa voix unique qui permet d'identifier les appareils respectifs.

2. Système conforme à la revendication 1, où les appareils contrôlables sont des appareils ménagers.

3. Système conforme à la revendication 1 ou 2, où les voix uniques des appareils contrôlables incluent une voix féminine et une voix masculine attribuées en fonction du choix de l'utilisateur, selon qu'il perçoit l'appareil comme un appareil masculin ou féminin.

4. Système conforme aux revendications 1 à 3, où le système de gestion central détermine l'appareil cible en fonction des conditions suivantes :
a) si l'appareil cible est explicitement défini dans la commande utilisateur, le système de gestion central émet une commande vers l'appareil cible ;
b) si l'appareil cible n'est pas explicitement défini, le système de gestion central vérifie si la commande utilisateur se rapporte à un appareil unique ;
- si b) est vrai, le système de gestion central émet une commande vers cet appareil ;
- si b) est faux, le système de gestion central génère une liste de tous les appareils pouvant assimiler la commande.

5. Système conforme à la revendication 4, où chaque appareil cible figurant sur la liste générée est déclenché par le système de gestion central pour transmettre une question à l'utilisateur, jusqu'à la réception d'une réponse positive.

6. Système conforme à la revendication 4 ou 5, où la liste des appareils cibles possibles est générée en fonction d'une approche de type probabilité.

7. Procédé de sélection d'un appareil cible parmi un certain nombre d'appareils contrôlables, l'appareil cible et les autres appareils contrôlables étant équipés de leur propre unité de synthèse vocale, où l'appareil cible et les autres appareils contrôlables sont reliés par un bus à un système de gestion central équipé d'un système de reconnaissance vocale et aménagé pour recevoir une commande vocale émise par un utilisateur et pour transmettre une commande correspondante aux appareils contrôlables, y compris l'appareil cible, **caractérisé en ce que** chaque synthétiseur vocal des appareils contrôlables, y compris l'appareil cible, synthétise sa voix unique qui permettra d'identifier l'appareil respectif.

8. Procédé conforme à la revendication 7, où l'appareil cible est déterminé en fonction des conditions suivantes :
a) si l'appareil cible est explicitement défini dans la commande utilisateur, l'appareil cible reçoit une commande depuis le système de gestion central ;
b) si l'appareil cible n'est pas explicitement défini, le système de gestion central vérifie si la commande utilisateur se rapporte à un appareil unique ;
- si b) est vrai, l'appareil cible reçoit une commande depuis le système de gestion central ;
- si b) est faux, le système de gestion central génère une liste de tous les appareils pouvant assimiler la commande.

9. Procédé conforme à la revendication 8, où chaque appareil cible figurant sur la liste générée est déclenché par le système de gestion central pour transmettre une question à l'utilisateur.

10. Procédé conforme à la revendication 8 ou 9, où la liste des appareils cibles possibles est générée en fonction d'une approche de type probabilité.
